# EUROPÄISCHE PATENTSCHRIFT

(11) **EP 1 448 481 B1**
(45) Veröffentlichungstag und Bekanntmachung des Hinweises auf die Patenterteilung: **08.02.2006**
(21) Anmeldenummer: 02772409.5
(22) Anmeldetag: 07.11.2002
(51) Int. Cl.: C02F 1/14

(54) **VORRICHTUNG ZUR TRINKWASSERGEWINNUNG AUS KONDENSAT SOWIE VERFAHREN ZU DEREN HERSTELLUNG**
DEVICE FOR RECOVERING DRINKING WATER FROM CONDENSATE AS WELL AS A METHOD FOR its PRODUCTION
DISPOSITIF DE RECUPERATION D'EAU POTABLE A PARTIR DE CONDENSAT et PROCEDE de sa FABRIQUation

(30) Priorität: 09.11.2001 DE 10155080
(43) Veröffentlichungstag der Anmeldung: 25.08.2004
(73) Patentinhaber: Augustin, Stephan, 80796 München (DE)
(72) Erfinder: Augustin, Stephan, 80796 München (DE)
(74) Vertreter: Weise, Reinhard
(86) Internationale Anmeldenummer: PCT/EP2002/012441
(87) Internationale Veröffentlichungsnummer: WO 2003/040040

(56) Entgegenhaltungen:
- DE-A- 3 015 254
- GB-A- 2 166 965
- US-A- 2 848 389
- US-A- 4 966 655

## Beschreibung

Die Erfindung betrifft eine Vorrichtung zur Trinkwassergewinnung aus Kondensat, ein Verfahren zur Herstellung dieser Vorrichtung sowie eine Tiefziehwerkzeug zur Durchführung dieses Verfahrens.

Insbesondere geht es bei der Erfindung um eine Vorrichtung, die auf Wasser, insbesondere Meerwasser, sowie auf Land eingesetzt werden kann, um unter der Einwirkung von Sonnenstrahlung verdunstetes Wasser als Kondensat aufzufangen und zu sammeln. Im Rahmen dieser vorgesehenen Anwendung ist auch eine solarbetriebene Meerwasserentsalzung vorgesehen.

Für Notfallzwecke sind bereits bei der Marine mobile aufblasbare Meerwasser-Entsalzungsvorrichtungen bekannt, die einen aufblasbaren PVC-Ring als Schwimmbasis und eine separate kegelförmige transparente PVC-Folie über dieser Schwimmbasis aufweist, welche aus Kondensationsfläche dient. Das Kondensat wird dabei zwischen der Ringaußenseite und Kegelinnenseite aufgefangen, wobei der forminstabile Folienkegel durch Stützstäbe in der erforderlichen Form gehalten wird.

Als nachteilig ist bei dieser vorbekannten Vorrichtung anzusehen, dass die Folien beschädigungsanfällig sind, insbesondere leicht Löcher bekommen können. Zudem ist ein Aufbau mit Stäben außerordentlich aufwendig und muss sachgerecht durchgeführt werden, um eine Fehlfunktion zu vermeiden. Die Herstellung der einzelnen Teile der Vorrichtung ist relativ teuer, und es gibt auch Handhabungsnachteile hinsichtlich der Reinigung der Folien aufgrund der Flexibilität. Zudem sind die Folien mechanisch begrenzt belastbar und anfällig für äußere Witterungseinflüsse, wie Wind und Regen. Schließlich ist auch die Entleerung des gesammelten Kondensats umständlich und problematisch, weil das Kondensat über die Unterseite der Vorrichtung ausgegossen werden muss und dabei auch Kondensat verloren gehen kann.

Aus der US 3, 415, 719 ist eine zusammenfaltbare solarbetriebene Kondenswasser-Gewinnungsvorrichtung bekannt, die aus einem aufblasbaren transparenten Plastikkörper besteht, in dem ein Wasserdampf-durchlässiger Sammelbehälter zum Auffangen von Kondensat als Bodenteil vorgesehen ist, die auf einem Gewässer zu platzieren ist. Die zuvor genannten Nachteile gelten im wesentlichen auch für diese Vorrichtung, insbesondere die Probleme hinsichtlich der Handhabung und der Formstabilität.

Aus der WO 00/03779 ist eine Kondenswasser-Gewinnungsvorrichtung mit einer kegelförmigen Haube bekannt, deren unteres Ende nach innen zur Bildung einer Sammelrinne und zur Aufnahme einer Bodenplatte mit einer Verdampfungs-Anordnung eingeformt ist. Umgeben ist die Verdampfungsplatte von einem zusätzlichen Auftriebsring. Als nachteilig ist ergänzend zu den zuvor erwähnten Nachteilen insbesondere die aufwendige Herstellung dieser Vorrichtung mit aufblasbarem Schwimmring, aufwendiger Gestaltung der Verdunstungsplatte sowie deren gebrauchsfertige Montage zu sehen.

Der Erfindung liegt demgemäss die Aufgabe zugrunde, eine Vorrichtung der eingangs genannten Art, ein Verfahren zu deren Herstellung sowie ein Tiefziehwerkzeug zur Durchführung des Verfahrens verfügbar zu machen, die vergleichsweise einfach aufgebaut ist und eine leichte und problemlose Handhabung bzw. Herstellung mit einem guten Wirkungsgrad bietet.

Erfindungsgemäß wird diese Aufgabe entsprechend durch die Merkmale der Patentansprüche 1, 18 bzw. 19 gelöst. Bevorzugte Merkmale, die die Erfindung vorteilhaft weiterbilden, sind den jeweils nachgeordneten Ansprüchen zu entnehmen.

Aufgrund der erfindungsgemäßen Ausgestaltung der Vorrichtung ergeben sich deutliche Herstellungs-, Gebrauchs- und Nutzungsvorteile. Das haubenförmige, insbesondere kegel- bzw. kegelstumpf- oder pyramidenförmige Formteil besteht vorteilhaft aus einem festen, aber biegsamen Material wie PET, PE, PP oder PC. Damit ist eine hinreichende mechanische Festigkeit gegen Beschädigungen gegeben, die durch spitze Gegenstände verursacht werden können. Auch eine Verformung durch Wind ist nicht gegeben. Die Funktionsfähigkeit wird daher durch äußere Witterungsbedingungen, wie Regen, Wind und dergleichen nicht beeinträchtigt.

In vorteilhafter Weise ist bei der Erfindung aufgrund der Geometrie des Formteils vorgesehen, das die Kondensatauffangrinne gleichzeitig als Schwimmkörper fungiert, wenn die Vorrichtung auf Wasserflächen eingesetzt wird. Ein zusätzlicher Schwimmkörper oder Auftriebsring ist damit entbehrlich. Die Vorrichtung lässt sich vorteilhaft einstückig und in Serie formen und kann dadurch preiswert hergestellt werden, wodurch insbesondere ein Einsatz in Entwicklungsländern günstig ist.

Als weiterer Vorteil ist anzusehen, dass das Formteil keinen Boden mit einem Verdampfungsabschnitt besitzt. Dadurch gibt es keine Probleme mit Algen und Krustenbildung. Die Vorrichtung ist einfach zu reinigen und ohne Aufblasen und Stützkonstruktion sofort gebrauchsfertig.

Zum Ausschütten des Kondensats ist nach einer weiteren Ausgestaltung der Erfindung an der Spitze des Formteils eine Ausgießöffnung vorgesehen. Vorteilhaft kann diese Öffnung aufgrund ihrer Platzierung nicht verschmutzen oder Wasser ungewünscht auslaufen.

Nach einer vorteilhaften weiteren Ausgestaltung der Erfindung ist die Ausgießöffnung mit einem Schraubverschluss verschließbar und damit wie eine Trinkflasche intuitiv benutzbar. Gleichzeitig kann die Vorrichtung auch aufgrund ihrer formstabilen Gestaltung nach Umdrehen als Regenauffangbehälter verwendet werden.

Schließlich besteht ein weiterer Vorteil in dem Vorsehen einer vorzugsweise verschließbaren Auslassöffnung im oberen Bereich des Formteils, insbesondere an der Spitze eines Kegels oder einer Pyramide, darin, dass das ganze Formteil um 180° umgekippt werden muss, um das Kondensat auszugießen. Dabei lässt sich vorteilhaft die Menge des gewonnenen Trinkwassers noch durch die an der Innenwand befindlichen Kondensattropfen, die mitausgeschenkt werden können, erhöht.

Nach einer weiteren Ausgestaltung der Erfindung ist der Formkörper aus zwei übereinander angeordneten Formteilen hergestellt, die im Bodenbereich aneinander befestigbar sind. Hierdurch ergibt sich eine sogenannte Doppelwandkonstruktion, bei der ein besonders guter Wirkungsgrad bei der Kondensatgewinnung erreicht werden kann. Hinzu kommt, dass von dem Außenmantel vorzeitig abtropfendes Kondensat an der parallel zur am Außenmantel sich erstreckenden Rinnen-Innenwand aufgefangen wird und nicht in die freie Bodenfläche wegtropft. Ein weiterer günstiger Aspekt der hochgezogenen Innenöffnung ist ein guter Schutz vor dem unerwünschten Eindringen von Wellen, auf denen die Vorrichtung schwimmt.

Von Vorteil ist bei allen Ausgestaltungen der erfindungsgemäßen Vorrichtung ferner, wenn die Innenseite der Mantelfläche mit einer beschlagfreien Schicht versehen und deren Außenseite kratzfest ist.

Für die aus zwei Teilen, insbesondere Tiefziehteilen, zusammengesetzte Vorrichtung ist neben der einfachen Herstellung mit wenig Abfall, auch das Vorsehen von Halteöffnungen, die sowohl als Haltegriffe als auch zur Verankerung bzw. Befestigung der Vorrichtung dienen, von Vorteil. Vorteilhaft sind zum Verkleben der beiden Formteile Kleber oder sonstige Verbindungsmittel mit Bakterien- und Algenverhindernden Substanzen vorgesehen.

Bei allen Ausgestaltungen der erfindungsgemäßen Vorrichtung können im Bereich der Ausgießöffnung Filterkartuschen eingesetzt werden, um Sand, Staub, Bakterien etc. herauszufiltern und/oder Mineralienkartuschen für Mineralienzusatz vorgesehen sein. Wenn die Haubenoberfläche, insbesondere die Kegeloberfläche leicht überwölbt ist, ergibt sich mehr Stabilität. Im Bereich der Ausgießöffnung vorgesehene Ösen unterhalb des Bundes tragen zur Formstabilität bei und sind vorteilhaft außerordentlich ausreißfest.

Zur Vergrößerung der Kondensationsfläche und für eine bessere Abkühlung kann zudem nach einer weiteren Ausgestaltung der Erfindung der Außenmantel durch Ein- und/oder Ausformungen, insbesondere rillen- oder wellenvergrößert sein. Eine zusätzliche Wärmesammelwirkung kann zudem durch ein auf der Unterseite des Formkörpers gespanntes Tuch aus dampfdurchlässigen Material erreicht werden, das zugleich eine Verunreinigung durch Wellenschlag verhindert. Im Bereich der Auffangrinne können zudem zusätzliche verschließbare Öffnungen für eine Drainage vorgesehen sein.

Zusammenfassend ermöglicht die erfindungsgemäße Vorrichtung eine einfache und intuitive Handhabung, wobei die Kondensatauffangrinne nicht nur einen guten Haltegriff, sondern auch eine Schwimmhilfe mit einfacher Bauweise verwirklicht. Die Vorrichtung muss nicht gewartet werden, ist stapelbar und ohne weitere An- oder Aufbauten sofort einsatzbereit.

Aufgrund der vorgesehenen Formgestaltung lassen sich die Formkörper auch sicher und problemlos stapeln und die entstehenden Stapel dann mit einer durch die offenen Ausgießöffnungen ragenden Tragstange einfach transportieren.

Das erfindungsgemäße Verfahren zur Herstellung einer Vorrichtung zur Trinkwassergewinnung aus Kondensat gemäß den Merkmalen des Anspruchs 18 sieht eine besondere Unterdruckbehandlung für den Tiefziehvorgang durch zusätzliches, seitliches Absaugen im Bereich der zu bildenden Auffangrinne sowie ein Abtrennen des Formteils von einem separierten Tiefziehwerkzeugteil außerhalb des Bereichs der Auffangrinne vor. Durch die besondere zusätzliche Absaugung im Bereich der zu bildenden Auffangrinne lassen sich vorteilhaft hintergreifende Formteilabschnitte vollständig formentsprechend ausformen, und das fertige Formteil lässt sich einfach von einem separierten Tiefziehteil anschließend trennen. Mit dem Verfahren lassen sich insbesondere rotationssymmetrische Vorrichtungen außerordentlich einfach und wirkungsvoll herstellen.

Das weiterhin vorgesehene Tiefziehwerkzeug zur Durchführung des Verfahrens mit den Merkmalen des Anspruchs 19 ist vorteilhaft mit einem Grundteil und einem Aufsatzteil gebildet, welches das Formen der vorgesehenen randseitigen Auffangrinne mit konstanter Wandstärke und gleichbleibender Außenkontur ermöglicht. Damit wird auch ein hintergreifender Bereich des Formteils, der sonst von dem Aufbringen vom Unterdruck im Bereich des Grundteils nicht ausreichend, berücksichtigt wird, gut ausgeformt. Die vorgesehenen Luftabsaugbohrungen zur Bildung der Auffangrinne sind bevorzugt in dem Aufsatzteil gebildet und mit Absaugluftkanälen des Grundteils verbunden.

Das Aufsatzteil weist nach einer bevorzugten weiteren Ausgestaltung einen umlaufenden abgerundeten Formrand für das Bilden eines Auffangrinnenrandes auf, wobei der Aufsatzabschnitt bevorzugt einen Anschlag für ein Trennwerkzeug aufweist, der vorzugsweise auf dem abgerundeten Formrand gebildet ist.

Nach einer weiteren Ausgestaltung der Erfindung ist das Aufsatzteil zweiteilig ausgebildet, um eine Herstellung der Absaugluftkanäle, einer Absaugebene und von Absaugluftkanälen in dem Aufsatzteil vorsehen zu können.

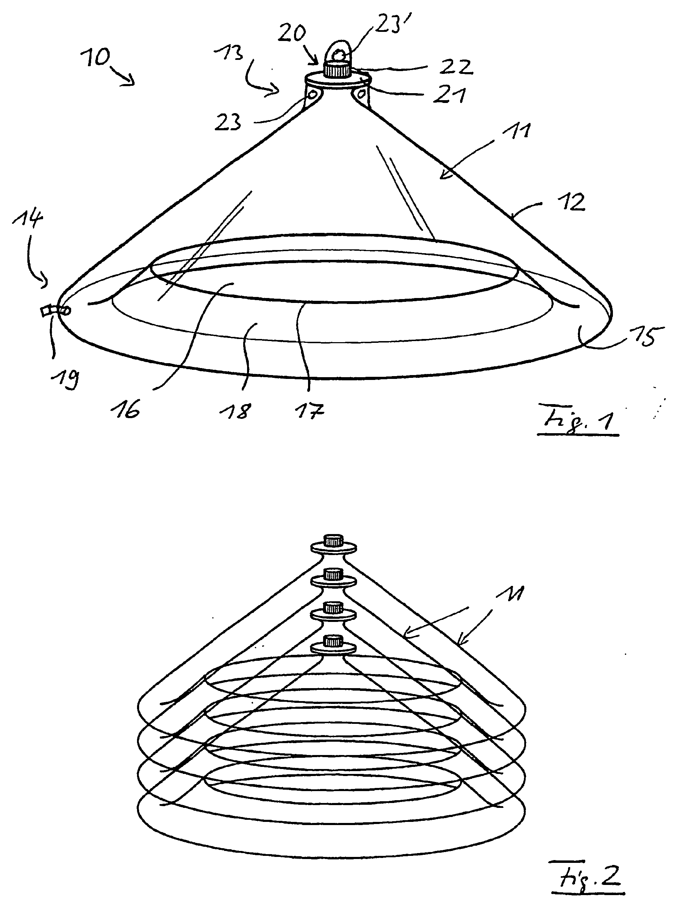

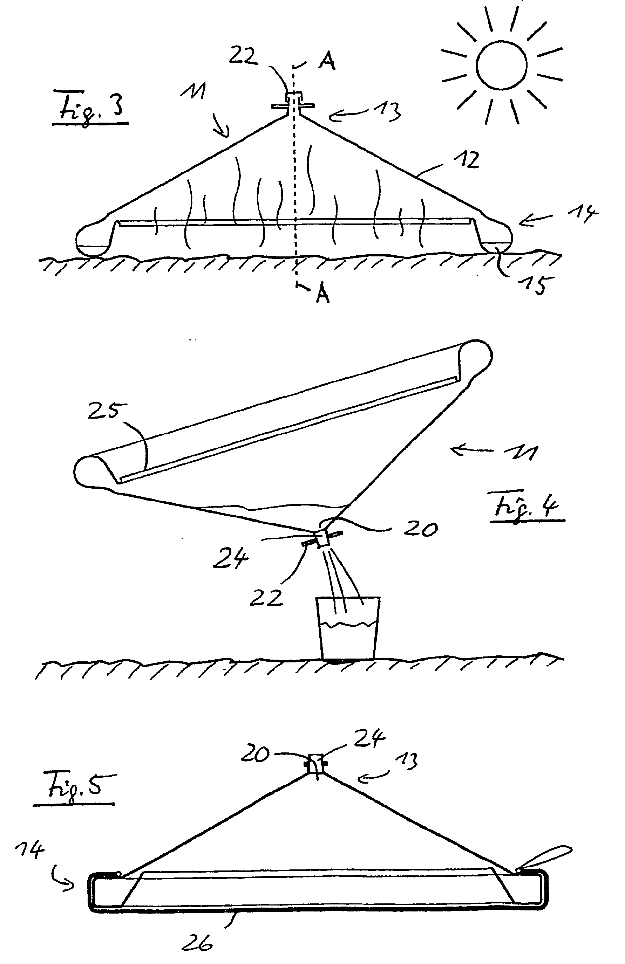

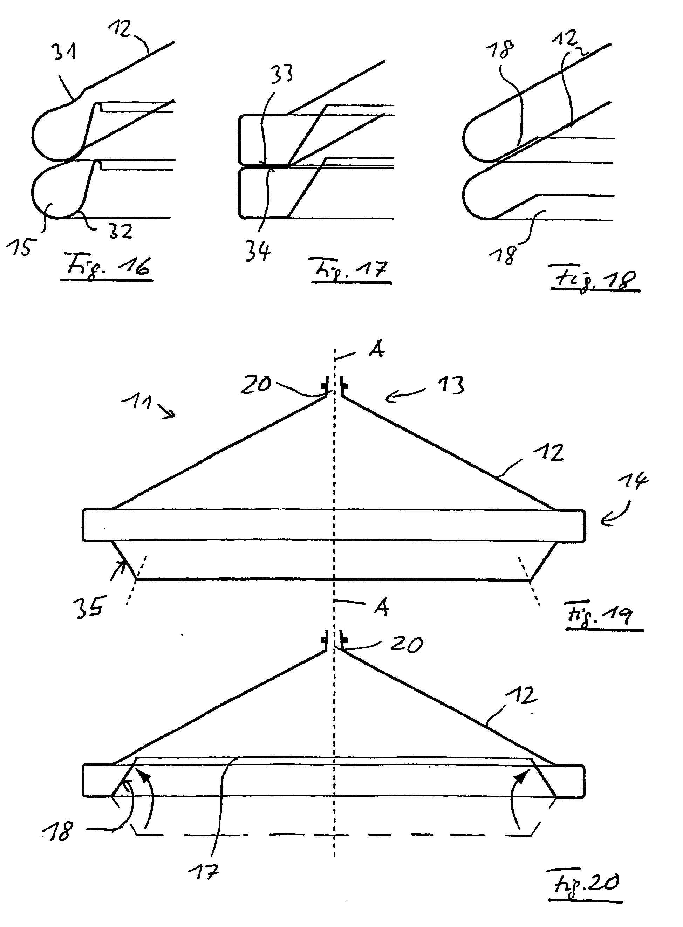

Nachfolgend wird die Erfindung unter Bezugnahme auf die beiliegenden Zeichnungen näher erläutert. Es zeigen:
**Figur 1**
   Eine perspektivische Seitenansicht einer ersten Ausgestaltung einer erfindungsgemäßen Vorrichtung;
**Figur 2**
   eine schematische Darstellung von 4 gestapelten Vorrichtungen gemäß Figur 1;
**Figur 3**
   eine weitere Ausgestaltung der Erfindung zur Erläuterung des Funktionsprinzips;
**Figur 4**
   das Ausführungsbeispiel gemäß Figur 3 im schematisierten Schnitt beim Ausgießen des Kondensats;
**Figur 5**
   ein weiteres Ausführungsbeispiel einer erfindungsgemäßen Vorrichtung, bei der ein wasserdurchlässiges schwarzes Tuch zum Schutz gegen Wellenschlag und zur Erzielung einer größeren Verdunstungswärme über die Bodenfläche gespannt ist;
**Figur 6**
   ein weiteres Ausführungsbeispiel der Erfindung in schematisierter Darstellung;
**Figur 7**
   eine Unteransicht der Vorrichtung gemäß Figur 6;
**Figur 8**
   eine Darstellung des Zusammenbaus der Vorrichtung gemäß Figur 6;
**Figuren 9 bis 12**
   verschiedene Ausführungsbeispiele für Vorrichtungen mit unterschiedlicher Außenwandgeometrie;
**Figuren 13 bis 15**
   eine schematisierte perspektivische Seitenansicht, eine Unteransicht und einen Schnitt entlang der Linie XIII - XIII in Figur 13;
**Figuren 16 bis 18**
   verschiedene Geometrien von stapelbaren Auffangrinnen;
**Figuren 19 und 20**
   schematische Darstellungen von Schritten zur Herstellung eines Ausführungsbeispiels einer erfindungsgemäßen Vorrichtung;
**Figur 21**
   einen schematisierten Schnitt durch ein Ausführungsbeispiel eines erfindungsgemäßen Tiefziehwerkzeugs zur Herstellung einer rotationssymmetrischen Vorrichtung;
**Figur 22**
   einen vergrößerten Teilschnitt im oberen linken Bereich von Figur 21 zur Darstellung von Luftabsaugbohrungen; und
**Figuren 23 bis 27**
   einzelne Schritte bei der Herstellung einer Ausbildungsform der erfindungsgemäßen Vorrichtung mit Hilfe eines erfindungsgemäßen Tiefziehwerkzeugs.

In Figur 1 ist ein erstes Ausführungsbeispiel einer erfindungsgemäßen Vorrichtung zur Trinkwassergewinnung aus Kondensat dargestellt. Die Vorrichtung 10 besteht aus einem kegelförmigen Formteil 11 mit einer Mantelfläche 12, die sich von einem oberen Bereich 13 des Formteils zu einem unteren Bereich 14 erstreckt. Das Formteil 11 ist rotationssymmetrisch und besteht aus einem transparenten Kunststoffmaterial, wie PET und PC.
Im unteren Bereich ist an dem Formkörper 11 eine nach innen ragende randseitige Auffangrinne 15 einstückig angeformt, die zugleich als Schwimmhilfe dient. Die Auffangrinne 15 umgibt eine offene Bodenfläche 16, welche durch den oberen Rand 17 und die Innenwand 18 der Auffangrinne 15 gebildet ist. Die Innenwand 18 der Auffangrinne 15 erstreckt sich annähernd parallel zur Mantelfläche 12.

Im unteren Bereich der Auffangrinne 15 ist eine Drainageöffnung 19 zum Ablassen des gesamten Kondensats vorgesehen, welche mit einem nicht dargestellten Verschluss verschließbar ist. Im oberen Bereich 13 des Formteils 11 ist eine Ausgießöffnung 20 gebildet, die einen außenseitigen Bund 21 sowie einen Gewindestutzen mit Schraubdeckel 22 als Verschlussorgan aufweist. Unterhalb des Bundes 21 sind noch seitliche Anformungen 23 zwischen Bund bzw. Kragen 21 und der Mantelfläche 12 sowie eine obere Deckelanformungen 23' ausgeformt, die die Stabilität in dem oberen Bereich erhöhen und als Haltegriff und Zusatzbefestigung dienen. In der einfachsten Grundform der Vorrichtung gemäß Figur 1 hat diese nur eine Ausgestaltung wie in der gestapelten Form in Figur 2 angedeutet, wobei der Stapel aus Formkörpern 11 gemäß Figur 2 außerordentlich formstabil ist und die Möglichkeit bietet, nach Entfernen der Schraubdeckel 22 eine Stange zum einfachen Transport hindurchzustecken.

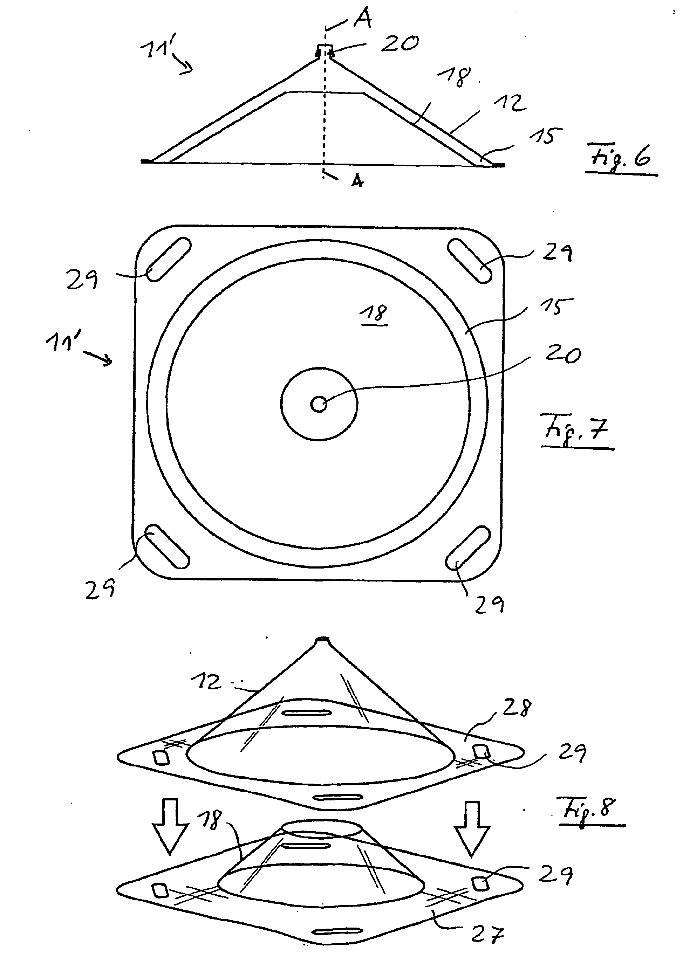

In Figur 2 und 3 wird die Handhabung eines Ausführungsbeispiels der erfindungsgemäßen Vorrichtung näher erläutert. Dabei besitzt dieses Ausführungsbeispiel in Abweichung von dem in Figur 1 gezeigten Ausführungsbeispiel im Bereich seiner Ausgießöffnung 20 eine Filterkartusche 24, und die Innenwand 18 der Auffangrinne 15 ist in Richtung der offenen Bodenfläche als umlaufender Schutzrand 25 ausgebildet, der als Rücklaufstop für Salz und Schmutzwasser dient, wie schematisiert in Figur 4 beim Ausgießen angedeutet.

Das Formteil 11 wird, wie in Figur 3 gezeigt, entweder auf einem feuchten Boden oder auf einer Wasserfläche angeordnet. Durch die einwirkende Sonnenwärme kommt es im Bereich der freien Bodenfläche zu einer Wasserverdunstung, wobei sich der Wasserdampf an der Innenfläche der Mantelflächen 12 als Kondensat niederschlägt und aufgrund der Schwerkraft an der Mantelfläche hinunter bis in die Auffangrinne 15 läuft. Wenn sich in der Auffangrinne 15 genug Kondensat gesammelt hat, wird das Formteil 11 in seinem oberen Bereich 13 ergriffen und umgedreht, wodurch das in der Auffangrinne 15 gesammelte Wasser über die zuvor vom Deckel 22 befreite Ausgießöffnung 20 ausströmt. Dabei kann vorteilhaft durch eine Schwenkbewegung des Formteils auch noch restliches Kondensat, das noch nicht in die Auffangrinne 15 heruntergelaufen ist, mit erfasst und ausgegossen werden.

Bei dem in Figur 5 dargestellten Ausführungsbeispiel ist die Innenwand 18 statt wie bei Figur 3 und 1 schematisiert geradflächig dargestellt, wobei der untere Abschnitt des Formteils 14 nach außen zur Aufnahme einer Tuchbefestigung geeignet randseitig erweitert ist. Mit 26 ist ein über die freie Bodenfläche 16 gespanntes schwarzes Tuch bezeichnet, das wasserdurchlässig ist und als Schutz gegen Wellenschlag und zur Erzielung einer größeren Verdunstungswärme dient.

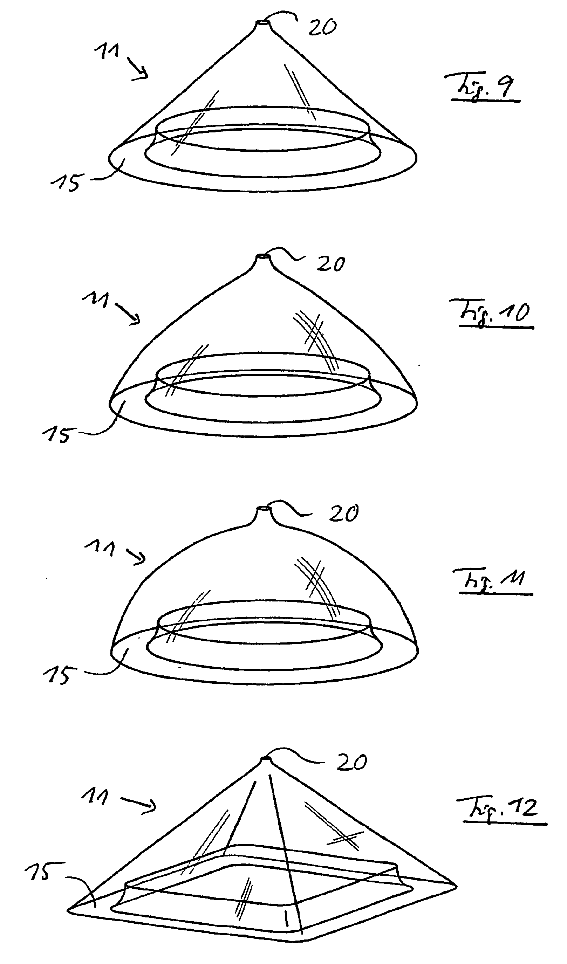

In den Figuren 6 und 7 ist in schematischer Seitenansicht und in Unteransicht ein doppelwandiges Formteil 11' dargestellt, das aus einem unteren Formteil 27 und einem oberen Formteil 28 besteht, wie in Figur 8 gezeigt. Das obere Formteil ist ebenso wie das untere Formteil als Tiefziehteil ausgebildet und besteht aus einem kegelförmigen Abschnitt, der an seinem unteren Ende ein annähernd quadratisches Bodenteil aufweist, das sich seitlich erstreckt. Das untere Formteil 27 setzt eine ebenfalls annähern quadratische Grundplatte, von der sich mittig ein kegelstumpfförmige Anformung erhebt, die die Innenwand 18 der Auffangrinne 15 bildet. Wie in Figur 6 gezeigt, erstrecken sich die Innenwand 18 und der Außenmantel 12 annähernd parallel bis nahezu in den oberen Bereich 13 des Formteils 11'. Beim Betrieb der Vorrichtung sammelt sich Kondensat in der vergleichsweise großen Auffangrinne 15, die zwischen der Innenwandung 18 und dem Außenmantel 12 gebildet ist. Mit 29 sind durchgehende Langlöcher bezeichnet, die als Haltegriffe und als Öffnung zum Befestigen der Vorrichtung dienen.

Wie in Figur 8 gezeigt, wird zur Herstellung der Vorrichtung gemäß Figur 6 und 7 das obere Formteil 28 zentrisch auf das untere Formteil 27 gesetzt und dort verklebt oder mit entsprechenden Verrastungen befestigt, wobei die Halteöffnungen 29 in beiden Bodenabschnitten fluchten. Die beiden Formteile 27 und 28 können auch durch einen Bakterien und Algen verhindernden Kleber bzw. Silikon miteinander verbunden werden.

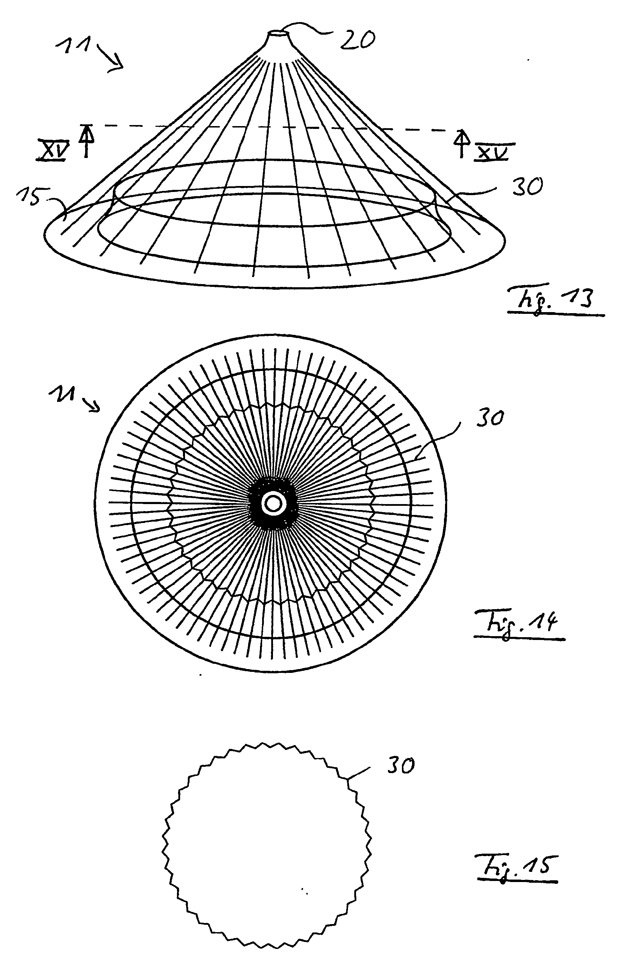

In Figur 9 bis 12 sind verschiedene Außenwandgeometrien des Formkörpers 11 dargestellt, wobei zusätzliche Anformungen wie Bund, Haltegriff sowie die Drainageöffnung zur Vereinfachung weggelassen sind. In Figur 1 besitzt die Vorrichtung ein kegelförmiges Formteil, während in Figur 10 die Mantelfläche haubenartig nach außen gewölbt ist. Hierdurch ergibt sich eine weitere Stabilitätsbesserung. Die Ausgestaltung gemäß Figur 11 ist eine weitere Möglichkeit, wobei die Mantelfläche halbkugelartig gestaltet ist. Eine maximale Flächenausnützung bietet die pyramidenförmige Ausgestaltung der Mantelfläche gemäß Figur 12.

In Figur 13 ist schematisiert bei einer Vorrichtung gemäß Figur 11 angedeutet, dass die Mantelfläche durch eine zickzackförmige Gestaltung mit Rillen vergrößert sein kann, um die Oberfläche zu erhöhen und das Herabströmen der Kondensattropfen besser steuern zu können. Statt der dargestellten Rillen 30 können auch sonstige Führungsein- und -ausformungen vorgesehen sein, die sich von dem oberen Bereich 13 zu dem unteren Bereich 14 des Formkörpers 11 erstrecken.

Figur 14 zeigt eine Unteransicht der Vorrichtung gemäß Figur 13, und Figur 15 deutet schematisiert den geschnittenen Profilverlauf entlang der Schnittlinie XV - XV in Figur 13 an.

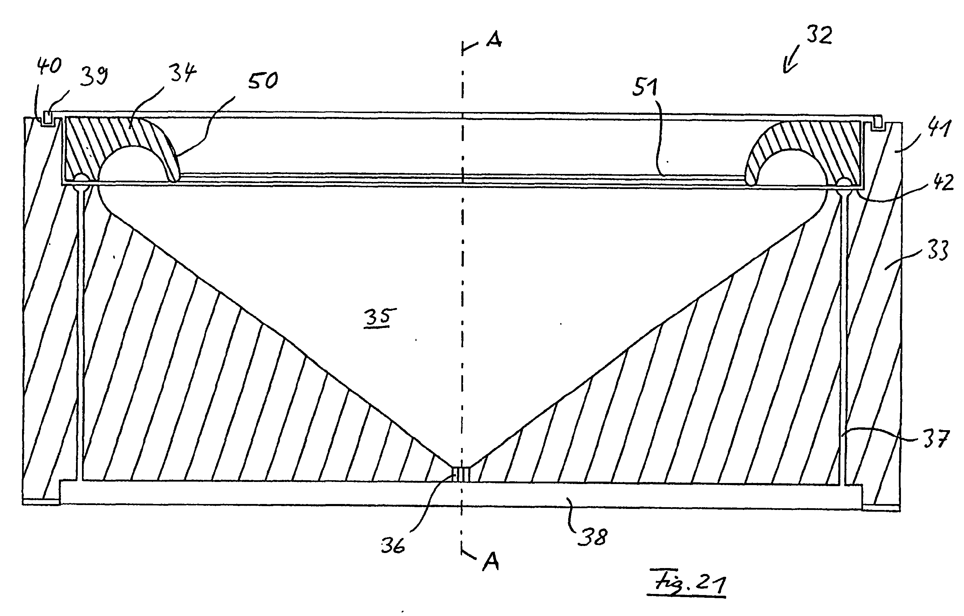

Die Figuren 16 bis 18 zeigen verschiedene Geometrieformen von Auffangrinnen für ein sicheres und zuverlässiges Stapeln von Formkörpern 11. Bei Figur 16 ist im unteren Bereich der Mantelfläche 12 eine umlaufende Einformung 31 vorgesehen, die zur Aufnahme eines Abschnitts 32 der Auffangrinne 15 dient, welche eine komplementäre Krümmung aufweist.

In Figur 17 ergibt sich durch die seitliche Ausformung von Halteabschnitten ähnlich dem Ausführungsbeispiel gemäß Figur 5 eine sichere und lagegenaue Stapelbarkeit, da hier die untere Fläche 33 des oberen Formkörpers waagerecht auf der oberen waagerechten Fläche 34 des unteren Formkörpers aufliegt.

In Figur 18 ist ein weiteres Ausführungsbeispiel für eine gute Stapelbarkeit der Formteile 11 dargestellt, bei denen die Innenwand 18 sich parallel zur Mantelfläche 12 erstreckt und flächig aufliegt.

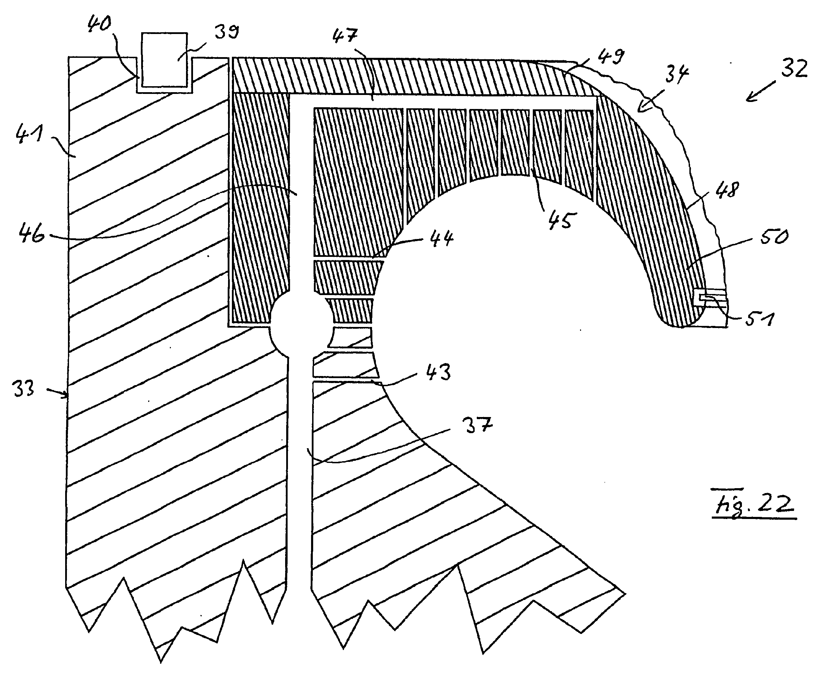

Für die Herstellung einer Vorrichtung gemäß dem in Figur 5 dargestellten Ausführungsbeispiel zeigen die Figuren 19 und 20 entsprechende Verfahrensschritte. Figur 19 stellt schematisiert ein blasgeformtes Formteil ohne Auffangrinne dar. Das Formteil 11 besitzt einen nach unten konisch zulaufenden offenen Abschnitt 35 mit Bodenteil, das anschließend weggeschnitten wird. Wie in Figur 20 gezeigt, wird dann der Abschnitt 35 nach Erwärmen eingeschwenkt bzw. nach oben als Innenwand 18 umgeklappt.

Anhand der Figuren 21 bis 27 werden nun ein Ausführungsbeispiel des erfindungsgemäßen Tiefziehwerkzeugs sowie das Verfahren zur Herstellung einer Vorrichtung zur Trinkwassergewinnung aus Kondensat näher erläutert. Figur 21 zeigt einen schematisierten Schnitt durch ein rotationssymmetrisches Tiefziehwerkzeug 32, das aus einem Grundteil 33 und einem Aufsatzteil 34 besteht. Im Grundteil 33 sind ein Hohlraum 35 zur Bildung des Wandabschnitts eines haubenförmigen Formteils, eine Einformung 36 für eine Ausgießöffnung des Formteils, seitliche Absaugkanäle 37, die von einem im Unterbereich des Grundteil 33 vorgesehenen Absaughohlraum 38 zu dem Aufsatzteil 34 führen, sowie eine umlaufende Dichtung 39 dargestellt, die in einer Ausnehmung 40 angeordnet ist, welche auf der Oberseite eines umlaufenden Randabschnitts 41 am oberen Ende des Grundteils 33 vorgesehen ist. Der Randabschnitt 41 erstreckt sich bis zu einem Absatz 42, welcher eine Anlagefläche für den Aufsatzteil 34 bildet. Mit A-A ist wiederum, wie in Figur 19 und 20, die Symmetrie - bzw. Rotationsachse des herzustellenden Formkörpers bezeichnet.

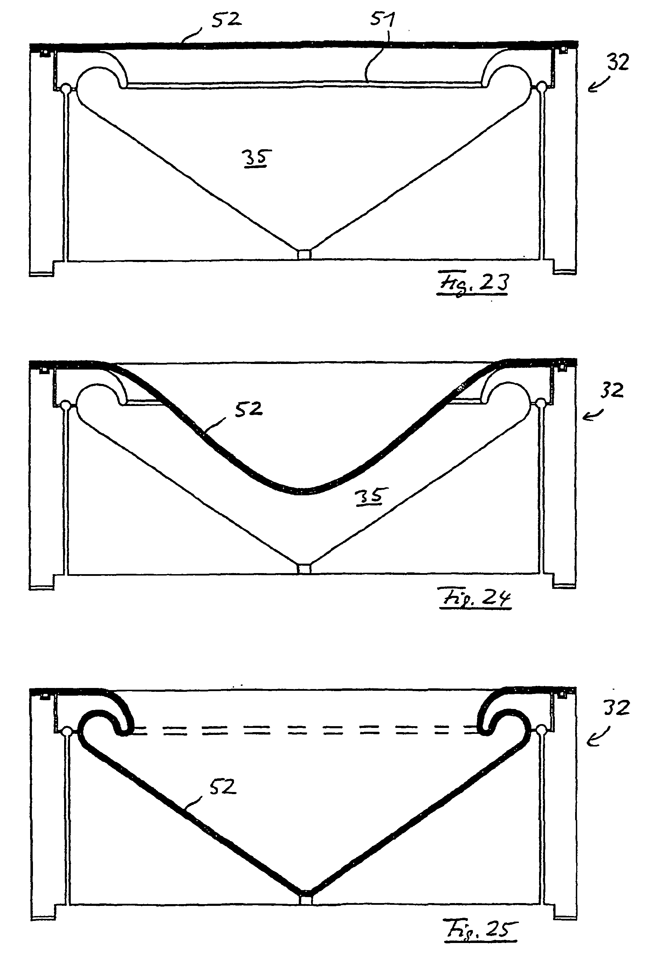

Figur 22 zeigt in einem vergrößerten Schnitt weitere Einzelheiten im Bereich des linken oberen Abschnitts der Tiefziehform 32. Besonders deutlich sind hier Luftabsaugbohrungen 43 bis 45 erkennbar, die in den Bereich der herzustellenden Auffangrinne des Formteils münden. Dabei sind die Absaugbohrungen 43 noch in dem Grundteil 33 gebildet und münden direkt in den ringförmigen Absaugkanal 37, während die Kanäle 44 und 45 zu dem Luftsaugkanal 46 bzw. zu einem mit diesem verbundenen Absaughohlraum 47 führen. Aus herstellungstechnischen Gründen ist dabei das Aufsatzteil 34 mit einem Hauptteil 48 und einem deckelförmigen Ringteil 49 gebildet, das den Absaughohlraum 47 nach oben abschließt. Das Hauptteil 48 besitzt einen umlaufenden abgerundeten Formrand 50, der im Schnitt gemäß Figur 22 einen fingerförmigen Querschnitt besitzt. Mit 51 ist ein in den Formrand eingeformter Anschlag für ein Trennwerkzeug bezeichnet. Dieser Anschlag dient dazu, das Formteil nach der Entformung aus dem kegelförmigen Trichter bzw. Hohlraum 35 von dem Aufsatzteil 34 zu trennen. Die Außenkontur des Formrandes 50 ist abgerundet, damit soviel Material wie möglich beim Tiefziehen in den Innenraum in dem- Bereich der herzustellenden randseitigen Auffangrinne des Formteils gezogen werden kann, ohne dass das Material reißt.

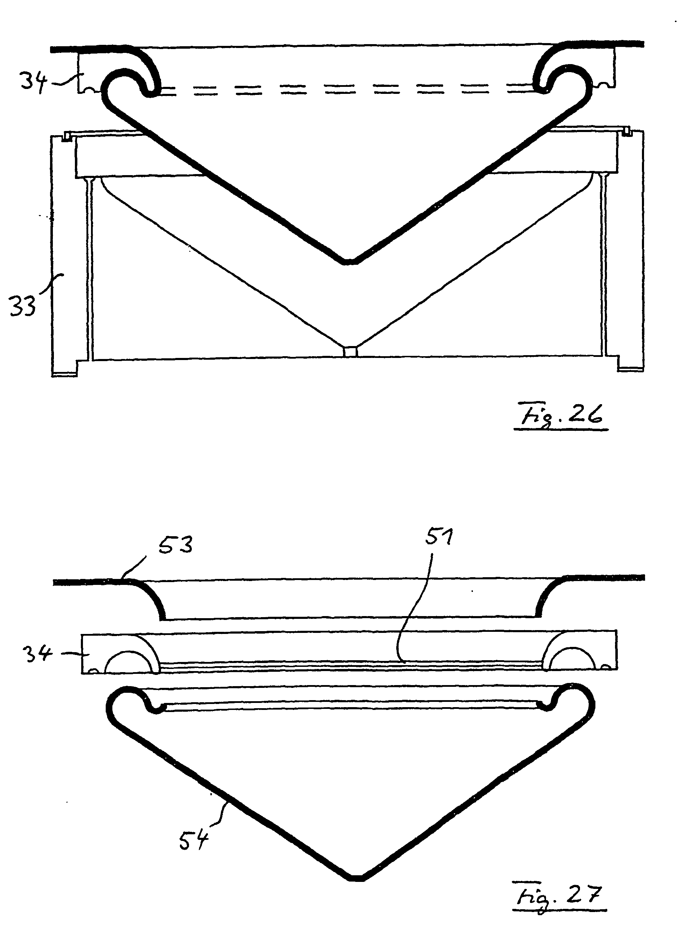

Das erfindungsgemäße Verfahren wird nun anhand der schematischen Darstellungen der Figuren 23 bis 27 näher erläutert. In der Ausgangsstellung gemäß Figur 23 ist gemäß dem ersten Verfahrensschritt eine erhitzte Platte 52 aus einem thermoplastischen transparenten Kunststoffmaterial mit randseitiger Abdichtung auf das schematisch dargestellte Tiefziehwerkzeug 32 aufgelegt. Anschließend wird in dem Tiefziehwerkzeug 32 Unterdruck zum Verformen der Platte 52 aufgebracht, wobei die Platte 52 sich in das Tiefziehwerkzeug 32 gemäß Figur 24 und dann gemäß Figur 25 hineinverformt, wobei der Unterdruck durch die Öffnung 36 (Figur 21) des Grundteils 33 sowie durch die in Figur 22 erläuterten Luftabsaugbohrungen 43 bis 45 im Bereich der zu bildenden randseitigen Auffangrinne des Formteils abgezogen wird.

Gemäß Figur 26 wird dann das abgekühlte Formteil zusammen mit dem Aufsatzteil 34 aus dem Grundteil 33 entformt, und als letzter Schritt erfolgt dann ein Trennen des Formteils entlang des Anschlags 51, wodurch zum einen ein Formteilabschnitt 53 und zum anderen das fertige Formteil 54 jeweils losgelöst von dem Aufsatzteil 34 vorliegen.

## Patentansprüche

1. Vorrichtung zur Gewinnung von Trinkwasser aus Kondensat, bestehend aus
einem haubenförmigen selbsttragenden Formteil (11) aus einem UV-beständigen transparenten Kunststoff wie PET oder PC,
wobei das Formteil (11) in seinem unteren Bereich (14) eine offene Bodenfläche (16) mit einer randseitigen Auffangrinne (15) besitzt,
wobei die Auffangrinne (15) eine zur Mantelfläche (12) orientierte Innenwand (18) aufweist, und
wobei das Formteil (11) in seinem oberen Bereich (13) eine Ausgießöffnung (20) besitzt.

2. Vorrichtung nach Anspruch 1, **dadurch gekennzeichnet, dass** die Innenwand (18) der Auffangrinne (15) einen sich annähernd parallel zu einer Kegelmantelfläche (12) erstreckenden Abschnitt aufweist.

3. Vorrichtung nach Anspruch 1 oder 2, **dadurch gekennzeichnet, dass** der obere Rand (17) der Innenwand (18) der Auffangrinne (15) in Richtung auf die offene Bodenfläche (16) umgeformt ist.

4. Vorrichtung nach einem der vorangehenden Ansprüche, **dadurch gekennzeichnet, dass** die Ausgießöffnung (20) koaxial zur Mittelachse A - A des Formteils (11) angeordnet ist.

5. Vorrichtung nach einem der vorangehenden Ansprüche, **dadurch gekennzeichnet, dass** für die Ausgießoffnung (20) eine entfernbare Kappe (22) vorgesehen ist.

6. Vorrichtung nach Anspruch 5, **dadurch gekennzeichnet, dass** die Kappe (22) als Schraubkappe ausgebildet ist, welche auf einen Gewindeabschnitt an der Ausgießöffnung (20) schraubbar ist.

7. Vorrichtung nach einem der vorangehenden Ansprüche, **dadurch gekennzeichnet, dass** im Bereich der Ausgießöffnung (20) wenigstens eine Halte- und Traganformung (21, 23, 23') gebildet ist.

8. Vorrichtung nach Anspruch 7, **dadurch gekennzeichnet, dass** eine Halteanformung (21) als Bund bzw. Kragen ausgebildet ist.

9. Vorrichtung nach einem der vorangehenden Ansprüche, **dadurch gekennzeichnet, dass** in die Ausgießöffnung (20) eine Filter- und/oder Mineralienzusetzeinrichtung (24) einsetzbar ist.

10. Vorrichtung nach einem der vorangehenden Ansprüche, **dadurch gekennzeichnet, dass** der Neigungswinkel der Mantelfläche (12) eines kegel- oder kegelstumpfförmig ausgebildeten Formkörpers (11) ca. 30° beträgt.

11. Vorrichtung nach einem der Ansprüche 1 bis 9, **dadurch gekennzeichnet, dass** die Mantelfläche des Formkörpers (11) nach außen gewölbt ist.

12. Vorrichtung nach einem der vorangehenden Ansprüche, **dadurch gekennzeichnet, dass** die Innenseite der Mantelfläche oberflächenvergrößernde Führungsein und/oder -ausformungen (30) aufweist, die sich von dem oberen Bereich (14) zu dem unteren Bereich (13) des Formkörpers (11) erstrecken.

13. Vorrichtung nach einem der vorangehenden Ansprüche, **dadurch gekennzeichnet, dass** der Formkörper (11) aus zwei übereinander angeordneten Formteilen (27, 28) hergestellt ist, die im jeweiligen Bodenbereich aneinander befestigbar sind.

14. Vorrichtung nach Anspruch 13, **dadurch gekennzeichnet, dass** das obere Formteil (28) den Außenmantel und einen flachen Bodenabschnitt und das untere Teil (27) einen flachen Bodenabschnitt und eine Rinneninnenwand (18) aufweisen.

15. Vorrichtung nach Anspruch 13 oder 14, **dadurch gekennzeichnet, dass** an wenigstens einem Bodenabschnitt Halteöffnungen (29) vorgesehen sind.

16. Vorrichtung nach einem der Ansprüche 13 bis 15, **dadurch gekennzeichnet, dass** die zur flachen Bodenfläche (16) weisende Seite der Rilleninnenwand mit einer beschlagfreien Schicht versehen ist.

17. Vorrichtung nach einem der vorangehenden Ansprüche, **dadurch gekennzeichnet, dass** für die offene Bodenfläche (16) eine schwarze wasserdurchlässige Abdeckung vorgesehen ist.

18. Verfahren zur Herstellung einer Vorrichtung gemäß Patentanspruch 1, bestehend aus folgenden Verfahrensschritten:
a) Anordnen einer erhitzten Platte aus einem thermoplastischen transparenten Kunststoffmaterial mit randseitiger Abdichtung auf einem Tiefziehwerkzeug;
b) Aufbringen von Unterdruck in dem Tiefziehwerkzeug im Bereich der zu bildenden Mantelfläche des Formteils und zusätzlich im Bereich der zu bildenden Auffangrinne;
c) Entformen des Formteils zusammen mit einem Tiefziehwerkzeugteil, das sich im Bereich der zu bildenden Auffangrinne befindet; und
c) Abtrennen des Formteils von dem separierten Tiefziehwerkzeugteil außerhalb des Bereichs der Auffangrinne.

19. Vorrichtung nach einem der Ansprüche 1-17, **dadurch gekennzeichnet, daß** die Vorrichtung durch Tiefziehen mittels eines Tiefziehwerkzeugs hergestellt ist, welches ein Grundteil (33), in dem ein Hohlraum (35) zur Bildung des Wandabschnitts einen haubenförmigen Formteils, vorzugsweise mit Einformung für die Ausgießöffnung, vorgesehen ist, und ein Aufsatzteil (34), das für die Bildung des Bereichs der randseitigen Auffangrinne des Formteils vorgesehen ist, wobei wenigstens das Aufsatzteil (34) Luftabsaugbohrungen (44, 45) zur Bildung der Auffangrinne des Formteils aufweist.

20. Vorrichtung nach Anspruch 19, **dadurch gekennzeichnet, dass** das Aufsatzteil (34) wenigstens einen Absaugluftkanal (46, 47) aufweist, der mit den Luftabsaugbohrungen (44, 45) verbunden ist.

21. Vorrichtung nach Anspruch 19 oder 20, **dadurch gekennzeichnet, dass** das Aufsatzteil (34) einen umlaufenden abgerundeten Formrand (50) für das Bilden eines Auffangrinnenrandes aufweist.

22. Vorrichtung nach einem der Ansprüche 19 bis 21, **dadurch gekennzeichnet, dass** das Aufsatzteil (34) einen Anschlag (51) für ein Trennwerkzeug aufweist.

23. Vorrichtung nach Anspruch 22, **dadurch gekennzeichnet, dass** der Anschlag (51) auf dem abgerundeten Formrand (50) gebildet ist.

24. Vorrichtung nach einem der Ansprüche 19 bis 23, **dadurch gekennzeichnet, dass** das Aufsatzteil (34) zweiteilig (48, 49) ausgebildet ist.

## Revendications

1. Dispositif d'obtention d'eau potable à partir d'un condensat, constitué
d'une pièce (11) moulée autoportante en forme de hotte, en une matière plastique transparente qui résiste aux UV, comme en PET ou en PC,
la pièce (11) moulée ayant dans sa partie (14) inférieure une surface (16) de fond ouverte ayant une goulotte (15) de recueil du côté du bord,
la goulotte (15) de recueil ayant une paroi (18) intérieure tournée vers la surface (12) latérale, et
la pièce (11) moulée ayant dans sa partie (13) supérieure une ouverture (20) de sortie.

2. Dispositif suivant la revendication 1, **caractérisé en ce que** la paroi (18) intérieure a une partie s'étendant à peu près parallèlement à une surface (12) latérale conique.

3. Dispositif suivant la revendication 1 ou 2, **caractérisé en ce que** le bord (17) supérieur de la paroi (18) intérieure de la goulotte (15) de recueil est déformé en direction de la surface (16) ouverte du fond.

4. Dispositif suivant l'une des revendications précédentes, **caractérisé en ce que** l'ouverture (20) de sortie est disposée coaxialement à l'axe A - A médian de la pièce (11) moulée.

5. Dispositif suivant l'une des revendications précédentes, **caractérisé en ce qu'**un capuchon (22) amovible est prévu pour l'ouverture (20) de sortie.

6. Dispositif suivant la revendication 5, **caractérisé en ce que** le capuchon (23) est constitué sous la forme d'un capuchon vissé qui peut se visser sur un tronçon fileté de l'ouverture (20) de sortie.

7. Dispositif suivant l'une des revendications précédentes, **caractérisé en ce qu'**il est formé au moins une conformation (21, 23, 23') de maintien et de support dans la zone de l'ouverture (20) de sortie.

8. Dispositif suivant la revendication 7, **caractérisé en ce que** la conformation (21) de maintien est constituée sous la forme d'une collerette ou d'un collet.

9. Dispositif suivant l'une des revendications précédentes, **caractérisé en ce qu'**un dispositif (24) de filtration et/ou de décantation de matière minérale peut être inséré dans l'ouverture (20) de sortie.

10. Dispositif suivant l'une des revendications précédentes, **caractérisé en ce que** l'angle d'inclinaison de la surface (12) latérale d'une pièce (11) moulée constituée sous la forme d'un cône ou d'un tronc de cône est d'environ 30°.

11. Dispositif suivant l'une des revendications 1 à 9, **caractérisé en ce que** la surface latérale de la pièce (11) moulée est courbée vers l'extérieur.

12. Dispositif suivant l'une des revendications précédentes, **caractérisé en ce que** la face intérieure de la surface latérale a des conformations (30) sortantes et/ou entrantes de guidage et d'augmentation de la surface qui s'étendent de la partie (14) supérieure à la partie (13) inférieure de la pièce (11) moulée.

13. Dispositif suivant l'une des revendications précédentes, **caractérisé en ce que** la pièce (11) moulée est fabriquée en deux parties (27, 28) moulées superposées qui peuvent être fixées l'une à l'autre dans la zone de fond respective.

14. Dispositif suivant la revendication 13, **caractérisé en ce que** la partie (28) moulée supérieure comporte la surface latérale extérieure et une partie de fond plate, et la partie (27) inférieure une partie de fond plate et une paroi (18) intérieure de goulotte.

15. Dispositif suivant la revendication 13 ou 14, **caractérisé en ce que** des ouvertures (29) de maintien sont prévues sur au moins une partie de fond.

16. Dispositif suivant l'une des revendications 13 à 15, **caractérisé en ce que** la face tournée vers la surface (16) de fond plate, de la paroi intérieure de goulotte, est munie d'une couche antibuée.

17. Dispositif suivant l'une des revendications précédentes, **caractérisé en ce qu'**il est prévu un recouvrement noir et perméable à l'eau pour la surface (16) de fond ouverte.

18. Procédé de fabrication d'un dispositif suivant la revendication 1, comprenant des stades suivants :
a) mise d'une plaque chauffée en une matière plastique transparente thermoplastique avec une garniture d'étanchéité du côté du bord sur un outil d'emboutissage profond ;
b) application d'une dépression dans l'outil d'emboutissage profond dans la zone de la surface latérale à former de la pièce moulée et, en outre, de la zone de la goulotte de recueil à former ;
c) démoulage de la pièce moulée ensemble avec une pièce de l'outil d'emboutissage qui se trouve dans la zone de la goulotte de recueil à former ; et
d) séparation de la pièce moulée et de la pièce de l'outil d'emboutissage profond distincte à l'extérieur de la zone de la goulotte de réception.

19. Dispositif suivant l'une des revendications 1 à 17, **caractérisé en ce que** le dispositif est fabriqué par emboutissage profond au moyen d'un outil d'emboutissage profond qui a une partie (33) de base dans laquelle est prévue une cavité (35) de formation de la partie de paroi d'une pièce moulée en forme de hotte, de préférence avec une conformation rentrée pour l'ouverture de sortie, et une partie (34) de coiffe qui est prévue pour la formation de la zone de la goulotte de recueil du côté du bord de la pièce moulée, au moins la partie (34) de coiffe ayant des trous (44, 45) d'aspiration d'air pour la formation de la goulotte de recueil de la pièce moulée.

20. Dispositif suivant la revendication 19, **caractérisé en ce que** la partie (34) de coiffe a au moins un canal (46, 47) d'aspiration d'air qui communique avec les trous (44, 45) d'aspiration d'air.

21. Dispositif suivant la revendication 19 ou 20, **caractérisé en ce que** la partie (34) de quartz a un bord (50) moulé arrondi et faisant le tour pour former un bord de la goulotte de recueil.

22. Dispositif suivant l'une des revendications 19 à 21, **caractérisé en ce que** la partie (34) de coiffe a une butée (51) pour un outil de séparation.

23. Dispositif suivant la revendication 22, **caractérisé en ce que** la butée (51) est formée sur le bord (50) moulé arrondi.

24. Dispositif suivant l'une des revendications 19 à 23, **caractérisé en ce que** la partie (34) de coiffe est constituée en deux parties (48, 49).

## Claims

1. Device for recovering drinking-water from condensate, comprising
a bonnet-shaped self-supporting moulded part (11) made of a transparent synthetic resin such as PET or PC, which is resistant to UV radiation,
said moulded part (11) comprising in its lower section (14) an open bottom area (16) with a collecting channel (15) on the side of the edge,
said collecting channel (15) having an inner wall (18) oriented towards said circumferential surface (12), and
said moulded part (11) having a pouring opening (20) in its upper section (13).

2. Device according to Claim 1, **characterised in that** the inner wall (18) of said collecting channel (15) presents a section extending approximately in parallel with a conical circumferential surface (12).

3. Device according to Claim 1 or 2, **characterised in that** said upper edge (17) of said inner wall (18) of said collecting channel (15) is shaped in a direction towards the open bottom area (16).

4. Device according to any of the preceding Claims, **characterised in that** said pouring opening (20) is disposed to extend coaxially relative to the centre axis A - A of said moulded part (11).

5. Device according to any of the preceding Claims, **characterised in that** a removable cap (22) is provided for said pouring opening (20).

6. Device according to Claim 5, **characterised in that** said cap (22) is configured as a screw cap that can be screwed onto a threaded section on said pouring opening (20).

7. Device according to any of the preceding Claims, **characterised in that** at least one moulded element (21, 23, 23') is formed for holding and supporting.

8. Device according to Claim 7, **characterised in that** a moulded holding element (21) is designed as collar.

9. Device according to any of the preceding Claims, **characterised in that** a filter and/or mineral-adding means (24) can be inserted into said pouring opening (20).

10. Device according to any of the preceding Claims, **characterised in that** the angle of inclination of said circumferential surface (12) of a moulded body (11) having conical or frusto-conical shape amounts to roughly 30°.

11. Device according to any of the Claims 1 to 9, **characterised in that** said circumferential surface of said moulded body (11) is vaulted to the outside.

12. Device according to any of the preceding Claims, **characterised in that** the inner side of said circumferential surface presents surface-enlarging moulded-in and/or moulded guiding elements (30) that extend from the upper section (14) to the lower section (13) of said moulded body (11).

13. Device according to any of the preceding Claims, **characterised in that** said moulded body (11) is made of two moulded parts (27, 28) disposed one on top of the other, which are adapted to be fastened on each other in the respective bottom zone.

14. Device according to Claim 13, **characterised in that** said upper moulded part (28) presents the outer skirt and a flat bottom section whilst said lower part (27) presents a flat bottom section and an inner wall (18) of said channel.

15. Device according to Claim 13 or 14, **characterised in that** holding openings (29) are provided on at least one bottom section.

16. Device according to any of the Claims 13 to 15, **characterised in that** the side of the inner wall of the groove, which faces said flat bottom area (16), is provided with a non-fogging coating.

17. Device according to any of the preceding Claims, **characterised in that** a black water-permeable cover is provided for said open bottom area (16).

18. Method of manufacturing a device according to Patent Claim 1, comprising the following steps of operation:
(a) arranging a heated sheet of a thermoplastic transparent synthetic resin with a sealing on the edge side on a deep-drawing tool;
(b) applying a vacuum in said deep-drawing tool in the zone of the circumferential surface to be formed on said moulded part and additionally in the zone of the collecting channel to be formed;
(c) removing the moulded part from the mould together with a deep-drawing tool element that is located in the zone of the collecting channel to be formed; and
(d) separating the moulded part from the separated deep-drawing tool element outside the zone of said collecting channel.

19. Device according to one of claims 1-17, **characterized in that** the device is produced by deep-drawing by means of a deep-drawing tool, which comprises a principal section (33), in which a cavity (35) is provided for forming the wall section of a bonnet-shaped moulded part, preferably with a moulded-in zone for the pouring opening, and an attachment section (34) that is provided for forming the zone of said collecting channel on the edge side of said moulded part, with at least said attachment section (34) comprising air suction bores (44, 45) for forming said collecting channel of said moulded part.

20. Device according to Claim 19, **characterised in that** said attachment section (34) comprises at least one suction air duct (46, 47) that is connected to said air suction bores (44, 45).

21. Device according to Claim 19 or 20, **characterised in that** said attachment part (34) comprises a peripheral rounded mould edge (50) for forming an edge of said collecting channel.

22. Device according to any of the Claims 19 to 21, **characterised in that** said attachment section (34) comprises a stop (51) for a separating tool.

23. Device according to Claim 22, **characterised in that** said stop (51) is formed on said rounded mould edge (50).

24. Device according to any of the Claims 19 to 23, **characterised in that** said attachment section (34) has a bipartite (48, 49) configuration.
